# FASCICULE DE BREVET EUROPEEN

(11) **EP 4 520 896 B1**
(45) Date de publication et mention de la délivrance du brevet: **11.02.2026**
(21) Numéro de dépôt: 23306503.6
(22) Date de dépôt: 08.09.2023
(51) Int. Cl.: E04H 12/08, E04H 12/22, F03D 13/20, E02D 27/42

(54) **DISPOSITIF DE GUIDAGE POUR L'ASSEMBLAGE D'UN FÛT DE PYLÔNE ET PROCÉDÉ D'ASSEMBLAGE CORRESPONDANT**
FÜHRUNGSVORRICHTUNG ZUR MONTAGE EINES TURMFASSES UND MONTAGEVERFAHREN DAFÜR
GUIDE DEVICE FOR ASSEMBLING A PYLON BARREL AND CORRESPONDING ASSEMBLY METHOD

(43) Date de publication de la demande: 12.03.2025
(73) Titulaire: RTE RESEAU DE TRANSPORT D'ELECTRICITE, 92073 Paris La Défense Cedex (FR)
(72) Inventeur: MOREAU, Stéphane, 13127 Vitrolles (FR)
(74) Mandataire: Bonnet, Michel

(56) Documents cités:
- CN-A- 109 519 029
- FR-A1- 2 395 940
- KR-B1- 100 921 258

## Description

La présente invention concerne un dispositif de guidage pour l'assemblage d'un fût de pylône sur un socle support disposé au sol. Elle concerne également un procédé d'assemblage d'un fût de pylône sur un socle support disposé au sol à l'aide d'un tel dispositif de guidage.

L'invention s'applique plus particulièrement à un dispositif de guidage comportant :
- un élément mâle de guidage, s'étendant depuis une base où il présente une largeur maximale jusqu'à un sommet libre de largeur minimale ; et
- un élément femelle de guidage, à fente profilée de centrage configurée pour recevoir l'élément mâle de guidage par son sommet libre, destiné à être solidaire du fût de pylône.

Un dispositif de ce type est décrit dans le document de brevet FR 2 395 940. Il est notamment fortement recommandé lorsque le pylône présente des dimensions et un poids tels qu'il doit être monté par hélicoptère ou par grue en plusieurs tronçons. C'est par exemple le cas d'un pylône monopode de télésièges, télécabines ou analogues comme envisagé dans le document précité, mais également d'un pylône pour le transport et/ou la distribution de courant électrique à haute ou très haute tension. L'élément mâle de guidage de forme trapézoïdale est monté sur une plaque circulaire fixée sous une tête de pylône tandis que l'élément femelle de guidage prend la forme d'une plaque circulaire trouée correspondante fixée au-dessus de l'extrémité supérieure creuse du fût de pylône. Ainsi, le dispositif de guidage est adapté pour guider l'assemblage de la tête de pylône sur le fût, notamment en guidant l'orientation angulaire de cet assemblage pour que des trous de fixation par boulonnage formés dans la plaque circulaire de l'élément mâle puissent se retrouver en face de trous correspondants formés dans la plaque circulaire de l'élément femelle.

Mais rien n'est spécifiquement prévu pour aider à la fixation du fût de pylône au sol. Or une fixation de l'extrémité inférieure du fût de pylône sur un socle support disposé au sol nécessite aussi généralement un centrage et le guidage d'une orientation angulaire pour mettre en correspondance des éléments de fixation par boulonnage, par exemple des tiges filetées s'étendant verticalement sur le socle support et des trous correspondants formés dans une bride annulaire de l'extrémité inférieure du fût de pylône. En pratique, le fût de pylône est habituellement approché et descendu par hélicoptère, tandis que des opérateurs au sol et à proximité du lieu de fixation guident de façon précise son orientation angulaire et verticale pour que les trous de sa bride annulaire se retrouvent bien face aux tiges filetées verticales du socle support avant la dernière phase de descente permettant de le poser au sol. Cette opération est périlleuse pour les opérateurs parce qu'ils doivent rester au plus près des tiges filetées afin d'assurer leur insertion dans les trous de la bride annulaire du fût de pylône sans les endommager.

Par ailleurs, la configuration de l'élément femelle de guidage dans le document FR 2 395 940 le rend particulièrement vulnérable lors de la phase d'approche de l'élément mâle, ce dernier étant susceptible de l'endommager ainsi que les éléments de fixation.

Un autre dispositif faisant partie de l'état de la technique est décrit dans CN 109 519 029 A.

Il peut ainsi être souhaité de prévoir un dispositif de guidage qui permette de s'affranchir d'au moins une partie des problèmes et contraintes précités.

Il est donc proposé un dispositif de guidage pour l'assemblage d'un fût de pylône sur un socle support disposé au sol, comportant :
- un élément mâle de guidage, s'étendant depuis une base où il présente une largeur maximale jusqu'à un sommet libre de largeur minimale ; et
- un élément femelle de guidage, à fente profilée de centrage configurée pour recevoir l'élément mâle de guidage par son sommet libre, destiné à être solidaire du fût de pylône ;
dans lequel :
- l'élément mâle de guidage est pourvu de moyens de fixation conçus pour le rendre solidaire du socle support par sa base depuis laquelle il s'étend jusqu'à son sommet libre ; et
- l'élément femelle de guidage est pourvu de moyens de fixation conçus pour le disposer et le fixer dans un volume intérieur du fût de pylône.

Ainsi, le dispositif de guidage est spécifiquement agencé pour une aide à l'assemblage du fût de pylône sur son socle support. Mais surtout, le fait de disposer l'élément femelle de guidage dans le volume intérieur plutôt que par apposition d'une plaque contre une extrémité du fût de pylône limite les risques de son endommagement et permet sa désolidarisation des éléments de fixation, ce qui réduit aussi le risque de les endommager lors de la phase d'approche de l'élément mâle de guidage.

De façon optionnelle, l'élément mâle de guidage est de forme générale triangulaire ou pyramidale ou arrondie au moins au voisinage de son sommet libre et comporte au moins deux armatures distantes à sa base se rejoignant au sommet libre.

De façon optionnelle également, l'élément mâle de guidage comporte en outre une plaque de renfort, de forme générale triangulaire au moins au voisinage de son sommet libre, s'étendant entre deux desdites au moins deux armatures depuis la base dans un plan orthogonal à un plan dans lequel s'étendent ces deux desdites au moins deux armatures.

De façon optionnelle également, la plaque de renfort est arrondie et soudée aux deux desdites au moins deux armatures au sommet libre de l'élément mâle.

De façon optionnelle également, l'élément femelle comporte une plaque réceptrice à fente oblongue et des équerres ou cornières de fixation de cette plaque réceptrice à l'intérieur du fût de pylône à distance de son extrémité inférieure de contact avec le socle support.

De façon optionnelle également, la fente oblongue de la plaque réceptrice de l'élément femelle comporte en outre au moins une encoche, par exemple deux encoches diamétralement opposées, d'insertion d'au moins une armature, par exemple deux armatures diamétralement opposées, de l'élément mâle de guidage pour un guidage renforcé en orientation angulaire de l'assemblage.

De façon optionnelle également, l'élément femelle de guidage comporte en outre au moins deux rampes de protection et de guidage s'étendant entre :
- au moins deux bords longitudinaux de la fente oblongue ; et
- une paroi interne du fût de pylône au niveau de son extrémité inférieure de contact avec le socle support.

De façon optionnelle également, l'élément femelle de guidage comporte en outre une plaque de consolidation à ouverture élargie fixée à l'intérieur du fût de pylône parallèlement à la plaque réceptrice entre cette dernière et l'extrémité inférieure de contact du fût de pylône avec le socle support, cette plaque de consolidation formant support médian des rampes de protection et de guidage.

De façon optionnelle également, des capuchons de protection de tiges filetées de fixation du fût de pylône au socle support sont prévus.

Il est également proposé un procédé d'assemblage d'un fût de pylône sur un socle support disposé au sol, comportant les étapes suivantes :
- fixation d'un élément mâle de guidage, s'étendant depuis une base où il présente une largeur maximale jusqu'à un sommet libre de largeur minimale, au socle support par sa base depuis laquelle il s'étend jusqu'à son sommet libre ;
- fixation d'un élément femelle de guidage, à fente profilée de centrage configurée pour recevoir l'élément mâle de guidage par son sommet libre, au fût de pylône dans un volume intérieur duquel il est disposé ;
- approche progressive du fût de pylône au-dessus du socle support jusqu'à engager le sommet libre de l'élément mâle de guidage dans la fente profilée de centrage de l'élément femelle de guidage ; puis
- descente progressive du fût de pylône jusqu'à atteindre le socle support en étant guidé et centré par coopération des éléments mâle et femelle de guidage.

L'invention sera mieux comprise à l'aide de la description qui va suivre, donnée uniquement à titre d'exemple et faite en se référant aux dessins annexés dans lesquels :
- la figure 1 représente schématiquement en perspective la structure générale d'un ensemble de fût de pylône et socle support, selon deux dispositions respectivement désassemblée et assemblée, comportant un dispositif de guidage selon un premier mode de réalisation de l'invention,
- la figure 2 illustre schématiquement un exemple de fixation de l'élément mâle du dispositif de guidage de la figure 1 sur le socle support,
- la figure 3 représente schématiquement en perspective la structure générale de l'ensemble de fût de pylône et socle support de la figure 1, selon une disposition désassemblée, comportant un dispositif de guidage selon une variante du premier mode de réalisation de la figure 1,
- la figure 4 représente schématiquement en perspective la structure générale d'un ensemble de fût de pylône et socle support, selon deux dispositions respectivement désassemblée et assemblée, comportant un dispositif de guidage selon un deuxième mode de réalisation de l'invention,
- la figure 5 représente schématiquement en perspective un exemple de réalisation de guide mâle du dispositif de guidage de la figure 1,
- la figure 6 représente schématiquement en perspective un exemple de réalisation de guide femelle du dispositif de guidage de la figure 1,
- la figure 7A représente schématiquement en coupe simplifiée l'ensemble de fût de pylône et socle support de la figure 1, selon la disposition assemblée, lorsque les guides mâle et femelle du dispositif de guidage sont ceux des figures 5 et 6,
- la figure 7B représente schématiquement en vue de dessus l'ensemble de fût de pylône et socle support de la figure 1, selon la disposition assemblée, lorsque les guides mâle et femelle du dispositif de guidage sont ceux des figures 5 et 6, et
- la figure 8 illustre les étapes successives d'un procédé d'assemblage d'un fût de pylône sur un socle support disposé au sol, selon un mode de réalisation de l'invention.

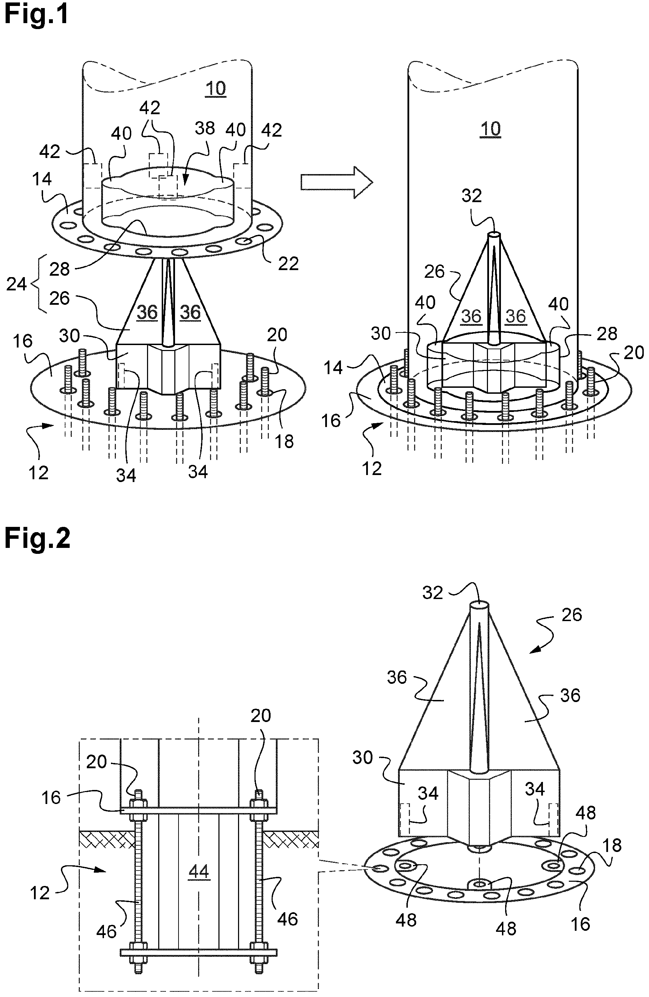

L'ensemble de fût de pylône 10 et socle support 12 représenté schématiquement, selon deux dispositions respectivement désassemblée (celle de gauche) et assemblée (celle de droite), sur la figure 1 comporte un dispositif de guidage pour réaliser l'assemblage.

Le fût de pylône 10 est de forme cylindrique, par exemple sur section circulaire ou polygonale, et présente à sa base une bride à collerette 14 de fixation au socle support 12. Il s'agit par exemple du fût d'un pylône pour le transport et/ou la distribution de courant électrique à haute tension ou très haute tension par voie aérienne. Ce type de pylône peut être constitué de plusieurs tronçons dont le premier, le fût de pylône, doit être solidement ancré au sol et dont au moins le dernier, la tête de pylône, supporte des câbles de transport et/ou distribution de courant électrique à l'aide éventuellement de consoles latérales. Il peut également s'agir d'un fût de pylône pour le support de toute autre charge, telle qu'un ensemble de télésièges, télécabines ou téléphériques, etc.

Le socle support 12 est généralement essentiellement enfoui sous terre, par exemple sous la forme d'une cage d'ancrage coulée dans le béton dont une plaque supérieure 16 de fixation au fût de pylône 10 apparaît en surface au sol dans un plan horizontal. Cette plaque supérieure 16 comporte une pluralité de trous 18 disposés en cercle et respectivement traversés par autant de tiges filetées 20 s'étendant verticalement vers le haut. Ces tiges filetées 20 sont par exemple des extensions des barreaux de la cage d'ancrage.

La bride à collerette 14 comporte autant de trous 22 que les trous 18, disposés en correspondance de ces derniers pour une fixation du fût de pylône 10 sur le socle support 12 par boulonnage. Compte tenu d'un maintien ferme qui doit être assuré par cette fixation, le jeu entre l'ouverture des trous 22 et le diamètre externe des tiges filetées 20 est de préférence très faible.

Un exemple de fût de pylône 10 convenant pour le transport ou la distribution de courant électrique présente les caractéristiques physiques suivantes :
- une masse totale de 2,1 tonnes,
- une hauteur de 18,8 mètres,
- un diamètre de 640 millimètres,
- une bride à collerette 14, présentant un diamètre extérieur de 850 millimètres, percée de vingt-quatre trous 22 de 28 millimètres de diamètre chacun et disposés en cercle selon un diamètre de perçage de 750 millimètres.

Ainsi, lors d'une phase d'approche du fût de pylône 10 au-dessus du socle support 12 avant assemblage et fixation par boulonnage, comme illustré en partie gauche de la figure 1, il est essentiel que les trous 18 et 22 soient disposés et approchés en strict vis-à-vis vertical pour un engagement des tiges filetées 20 dans les trous 22 sans casse ni déformations. C'est la raison pour laquelle il est prévu un dispositif de guidage 24 comportant un élément mâle 26 et un élément femelle 28 selon un premier mode de réalisation de l'invention.

L'élément mâle 26 s'étend depuis une base 30 où il présente une largeur maximale jusqu'à un sommet libre 32 de largeur minimale. Il est pourvu de moyens de fixation 34 conçus pour le rendre solidaire du socle support 12 par sa base 30 depuis laquelle il s'étend jusqu'à son sommet libre 32. Dans la représentation très schématique et non limitative des figures 1 à 3, sa forme générale est cruciforme, depuis la base 30 en forme de croix jusqu'au sommet libre où se rejoignent quatre ailettes triangulaires, dont deux ailettes principales 36 de plus grande largeur. Les moyens de fixation 34 sont disposés en face inférieure de la base 30 au contact de la plaque supérieure 16, par exemple sous la forme de trous taraudés permettant une fixation par boulonnage.

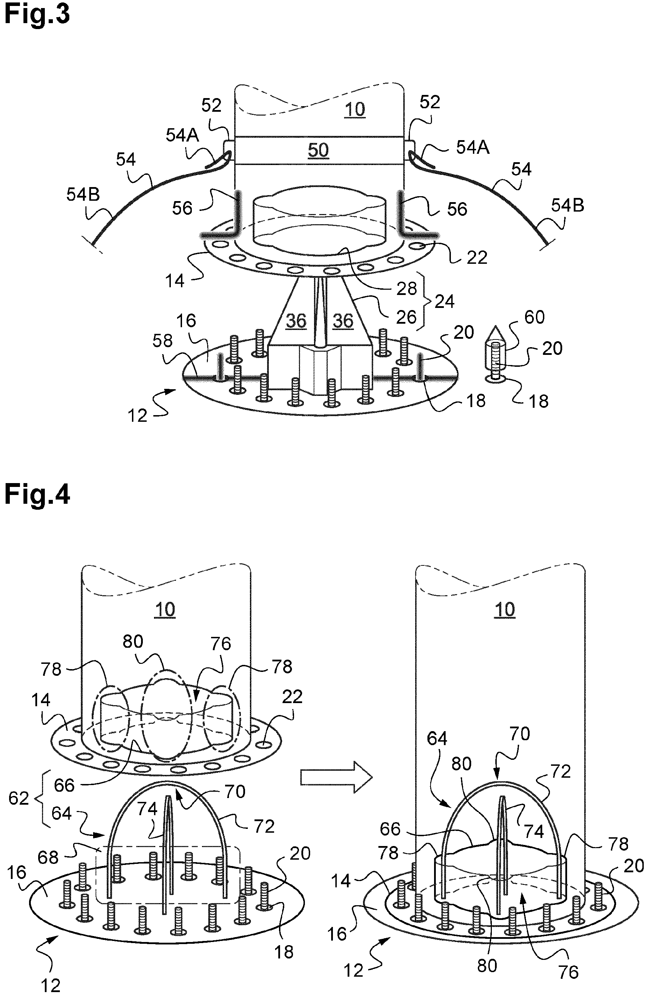

L'élément femelle 28 est quant à lui destiné à être solidaire du fût de pylône 10. Quelles que soient sa structure et sa forme, par exemple une plaque évidée, cet élément femelle 28 présente une fente profilée de centrage 38 configurée pour recevoir l'élément mâle de guidage 26 par son sommet libre 32. Dans la représentation très schématique et non limitative des figures 1 et 3, la forme générale de cette fente 38 est oblongue avec deux encoches 40 aux extrémités diamétralement opposées de sa plus grande largeur pour recevoir la base des deux ailettes principales 36 de l'élément mâle de guidage 26. Conformément aux principes généraux de la présente invention, l'élément femelle de guidage 28 est pourvu de moyens de fixation 42 conçus pour le disposer et le fixer dans le volume intérieur du fût de pylône 10. On note par ailleurs qu'il est indépendant de la bride à collerette 14. Les moyens de fixation 42 sont représentés de façon très schématique sur la figure 1 parce qu'ils peuvent prendre toute forme appropriée bien connue de l'homme du métier, notamment celle d'équerres ou cornières fixées à la paroi interne du fût de pylône 10 par soudure et au corps principal de l'élément femelle de guidage 28 par boulonnage.

Ainsi, lors de l'approche verticale vers le bas du fût de pylône 10 pour son assemblage sur le socle support 12, l'élément mâle de guidage 26 s'introduit par son sommet libre 32 dans la fente profilée de centrage 38 et guide angulairement la descente du fût de pylône 10 en épousant la forme de la fente 38 et en orientant sa plus grande largeur dans le sens de ses deux ailettes principales 36 jusqu'à introduire ces dernières dans les deux encoches 40. Il en résulte tout d'abord une mise en correspondance verticale des trous 18 et 22, puis une introduction des tiges filetées 20 dans les trous 22 lorsque la descente du fût de pylône 10 se poursuit, jusqu'à arriver à la situation de la partie droite de la figure 1 dans laquelle l'assemblage est prêt à être fixé par boulonnage à l'aide d'écrous à visser sur les tiges filetées 20.

La figure 2 illustre plus précisément une possibilité de fixation de l'élément mâle de guidage 26 sur le socle support 12. Ce dernier est représenté en coupe en partie gauche. Il est essentiellement enfoui dans une fouille 44 sous la forme d'une cage d'ancrage dont les barreaux 46 s'étendent verticalement au-delà de la surface du sol sous la forme des tiges filetées 20. La plaque supérieure 16 se présente dans cet exemple sous la forme d'une couronne trouée, i.e. présentant les trous 18 à travers lesquels passent les tiges filetées 20, comme c'est généralement le cas dans l'état de la technique. Pour une adaptation aux principes généraux de l'invention, une telle couronne trouée peut être modifiée par simple ajout d'oreilles de fixation 48 trouées et disposées, par exemple par soudure, en correspondance des moyens de fixation 34 de l'élément mâle de guidage 26. Elles permettent, comme évoqué précédemment et lorsque les moyens de fixation 34 se présentent sous la forme de trous taraudés, une fixation de l'élément mâle de guidage 26 sur le socle support 12 par vissage ou boulonnage.

La figure 3 représente schématiquement en perspective la structure générale de l'ensemble de fût de pylône 10 et socle support 12 selon la disposition désassemblée de la partie droite de la figure 1, conformément à une variante de réalisation du dispositif de guidage 24 incluant plusieurs éléments optionnels.

Un premier élément optionnel est un élément à cordes de guidage comportant :
- un collier de serrage 50 destiné à être disposé et serré autour de la partie inférieure du fût de pylône 10 à courte distance de la bride à collerette 14 (i.e. quelques dizaines de centimètres),
- deux dispositifs 52 de fixation d'extrémités de cordes, tels que des chapes ou anneaux de levage, poignées ou tous autres dispositifs équivalents, destinés à être rendus solidaires du fût de pylône 10 par enserrement entre ce dernier et le collier de serrage 50, et
- deux cordes 54 dont deux premières extrémités respectives 54A sont accrochées aux deux dispositifs de fixation 52.

Les deux deuxièmes extrémités opposées respectives 54B des deux cordes 54 sont destinées à être prises en main par deux opérateurs au sol, pour aider au guidage du fût de pylône 10 approché et descendu par hélicoptère. Compte tenu des éléments mâle et femelle 26, 28 du dispositif de guidage 24, les opérateurs peuvent rester à bonne distance de l'assemblage du fût de pylône 10 sur le socle support 12, et donc à bonne distance de tout danger.

De préférence, les deux dispositifs de fixation 52 sont disposés dans l'axe de plus grande largeur de la fente profilée de centrage 38, c'est-à-dire celui des deux encoches 40, pour que le guidage angulaire à distance soit facilité.

On notera que le premier élément optionnel peut comporter plus de deux dispositifs de fixation 52 et plus de deux cordes 54, pour une utilisation par plus de deux opérateurs au sol. Tout dépend de l'application visée ainsi que des dimensions et du poids du fût de pylône 10.

Un deuxième élément optionnel est un élément de marquage comportant :
- un premier marquage 56, par exemple d'une couleur bien visible telle que le rouge, à disposer sur le fût de pylône 10 selon deux marques diamétralement opposées dans l'alignement de l'axe de largeur maximale de la fente profilée de centrage 38 de l'élément femelle de guidage 28, c'est-à-dire celui de ses encoches 40, et éventuellement de préférence au droit des dispositifs de fixation 52, et
- un deuxième marquage 58, par exemple d'une même couleur bien visible telle que le rouge, à disposer sur la plaque supérieure 16 du socle support 12 selon une marque longitudinale dans l'alignement des deux ailettes principales 36 de l'élément mâle de guidage 26, éventuellement de préférence dans un alignement correspondant à celui de deux des trous 18 et de deux des tiges filetées 20.

Ce deuxième élément optionnel constitue une aide visuelle au guidage angulaire du fût de pylône 10, notamment lorsque celui-ci se fait à distance à l'aide des cordes 54.

Un troisième élément optionnel est un ensemble de capuchons 60 pour les tiges filetées 20. Chaque capuchon 60 est par exemple constituée d'un pion de centrage amovible de forme générale cylindrique creuse ouverte à sa base et fermée à son extrémité supérieure par un embout conique. Il est destiné à recouvrir la tige filetée correspondante 20, la forme conique de son extrémité supérieure remplissant une fonction de finalisation du centrage du trou 22 correspondant sur la tige filetée 20 qu'il recouvre. Les capuchons 60 remplissent en outre une fonction de protection des tiges filetées 20 lors de l'approche du fût de pylône 10, étant donné que le jeu entre les trous 22 de la bride à collerette 14 et les tiges filetées 20 est faible, par exemple 4 mm pour des tiges filetées de 24 mm de diamètre. Des pions en matière plastique de 1 mm d'épaisseur conviennent.

L'ensemble de fût de pylône 10 et socle support 12 représenté schématiquement sur la figure 4, selon les deux dispositions respectivement désassemblée (celle de gauche) et assemblée (celle de droite) de la figure 1, comporte un dispositif de guidage 62 à éléments mâle 64 et femelle 66 pour réaliser l'assemblage selon un deuxième mode de réalisation possible de l'invention.

L'élément mâle 64 s'étend depuis une base 68 où il présente une largeur maximale jusqu'à un sommet libre 70 de largeur minimale. Il est pourvu de moyens de fixation (non visibles sur la figure 4) conçus pour le rendre solidaire du socle support 12 par sa base 68 depuis laquelle il s'étend jusqu'à son sommet libre 70. Les moyens de fixation sont par exemple, comme dans le mode de réalisation précédent, disposés en face inférieure de la base 68 au contact de la plaque supérieure 16, par exemple également sous la forme de trous taraudés permettant une fixation par boulonnage.

Dans la représentation très schématique et non limitative de la figure 4, la forme générale de l'élément mâle 64 est en deux arceaux de forme générale semi-elliptique ou parabolique. Un premier arceau principal 72 de plus grandes dimensions peut être considéré comme constitué de deux armatures distantes à sa base 68, où elles s'étendent verticalement jusqu'à une certaine hauteur à partir de la plaque supérieure 16 à laquelle elles sont fixées, puis se rejoignant en arrondi au sommet libre 70 selon une forme générale semi-elliptique ou parabolique. Dans un plan perpendiculaire et de manière à conférer une forme générale en croix à l'élément mâle de guidage 64, un deuxième arceau secondaire 74 de dimensions inférieures au premier peut être considéré comme constitué lui aussi de deux armatures distantes à sa base 68, où elles s'étendent verticalement jusqu'à une certaine hauteur à partir de la plaque supérieure 16 à laquelle elles sont fixées, puis se rejoignant en arrondi au sommet libre 70, tout en restant sous le premier arceau principal 72, selon une forme générale semi-elliptique ou parabolique.

Chaque arceau 72 et 74 peut être formé d'une seule et même structure tubulaire recourbée pour prendre la forme souhaitée, conférant dans tous les cas une largeur maximale à la base 68 et une largeur minimale au sommet libre 70.

L'élément femelle 66 de ce deuxième mode de réalisation se distingue essentiellement de l'élément femelle 28 du premier mode de réalisation en ce que sa fente profilée de centrage 76 configurée pour recevoir l'élément mâle de guidage 64 par son sommet libre 70 ne comporte par deux mais quatre encoches, dont deux (portant la référence 78) aux extrémités de sa plus grande largeur pour recevoir la base du premier arceau principal 72 dans son axe principal et deux (portant la référence 80) aux extrémités de sa plus petite largeur pour recevoir la base du deuxième arceau secondaire 74 dans son axe secondaire qui est perpendiculaire à l'axe principal. Conformément aux principes généraux de la présente invention, l'élément femelle de guidage 66 est pourvu de moyens de fixation conçus pour le disposer et le fixer dans le volume intérieur du fût de pylône 10. Ils ne sont pas illustrés sur la figure 4 mais peuvent être identiques à ceux du premier mode de réalisation.

Ainsi, lors de l'approche verticale vers le bas du fût de pylône 10 pour son assemblage sur le socle support 12, l'élément mâle de guidage 64 s'introduit, par son sommet libre 70 qui correspond au sommet de son premier arceau principal 72, dans la fente profilée de centrage 76 et guide angulairement la descente du fût de pylône 10 en épousant la forme de la fente 76 et en orientant sa plus grande largeur dans le sens du premier arceau principal 72 jusqu'à introduire ce dernier dans les deux encoches 78. En poursuivant l'approche verticale, le deuxième arceau secondaire 74 de l'élément mâle de guidage 64 s'introduit à son tour par son sommet dans la fente profilée de centrage 76 et guide lui aussi angulairement la descente du fût de pylône 10 en épousant la forme de la fente 76 et en orientant la plus petite largeur de cette dernière dans son sens jusqu'à s'introduire dans les deux encoches 80. Il en résulte tout d'abord une mise en correspondance verticale des trous 18 et 22, puis une introduction des tiges filetées 20 dans les trous 22 lorsque la descente du fût de pylône 10 se poursuit, jusqu'à arriver à la situation de la partie droite de la figure 4 dans laquelle l'assemblage est prêt à être fixé par boulonnage à l'aide d'écrous à visser sur les tiges filetées 20. Avantageusement, le jeu des encoches 78 sur le premier arceau principal 72 est supérieur à celui des encoches 80 sur le deuxième arceau secondaire 74 pour réaliser un guidage angulaire progressif du fût de pylône 10 sur le socle support 12 en limitant le risque qu'il puisse se désemboîter.

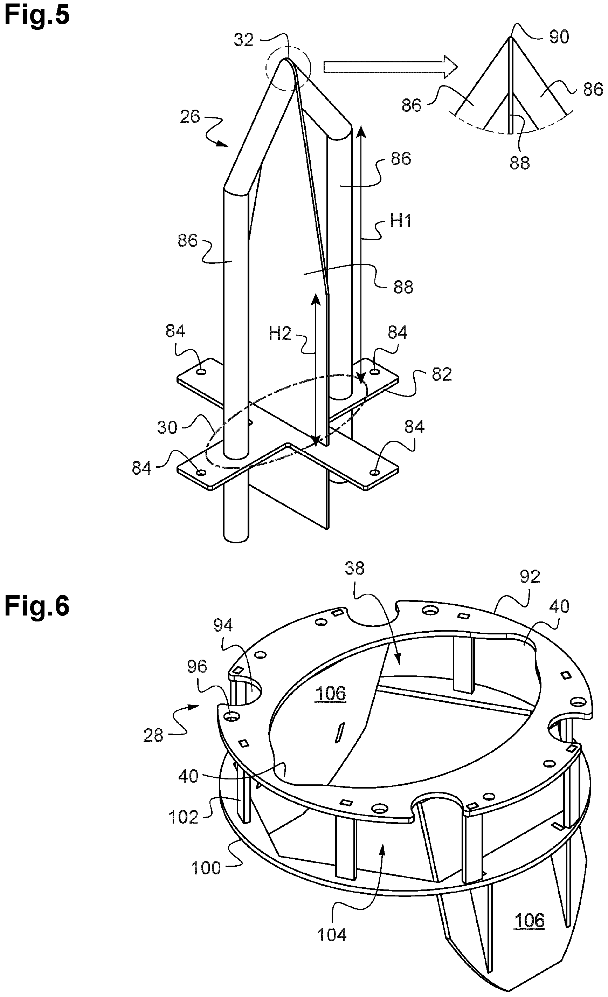

Un exemple concret de réalisation de l'élément mâle de guidage 26 est illustré en perspective sur la figure 5. Il est monté sur une plaque en croix 82 percée de quatre trous 84 aux extrémités de ses quatre branches pour une fixation par boulonnage sur la plaque supérieure 16 du socle support 12. Il comporte deux armatures 86 distantes à sa base 30, s'étendant orthogonalement à travers les parties médianes de deux branches opposées parmi les quatre branches de la plaque en croix 82. Ces deux armatures 86 sont tubulaires, de section circulaire, et montent parallèlement jusqu'à une certaine hauteur H1 au-dessus de la plaque en croix 82. Elles s'étendent en outre parallèlement sous la plaque en croix 82 pour entrer verticalement dans la fouille dans laquelle le socle support 12 est destiné à être enfoui. Au-delà de la hauteur H1, chacune des deux armatures 86 présente une coudée dirigée vers l'autre armature, pour finalement se rejoindre au sommet libre 32 et former ainsi une portion supérieure triangulaire de jonction circulaire entre les deux armatures 86.

L'élément mâle de guidage 26 de la figure 5 comporte en outre une plaque de renfort 88, de forme générale rectangulaire jusqu'à une hauteur H2 au-dessus de la plaque en croix 82, où H2 < H1, puis triangulaire jusqu'au sommet libre 32, s'étendant entre les deux armatures 86 depuis la base 30 dans un plan orthogonal au plan de coupe des deux armatures 86. Cette plaque de renfort 88 est arrondie au sommet libre 32 pour correspondre à la jonction circulaire des deux armatures. Elle s'interpose entre elles et leur est fixée par soudure ou collage. L'arrondi de la plaque de renfort 88 dans son plan permet d'adoucir tout contact entre l'élément mâle 26 et l'élément femelle 28 lors de l'assemblage. Un arrondi supplémentaire 90 orthogonal à son plan peut en outre être formé par meulage dans son épaisseur, c'est-à-dire entre les deux armatures 86 comme illustré en partie droite de la figure 5, de manière à adoucir encore davantage tout contact entre l'élément mâle 26 et l'élément femelle 28 lors de l'assemblage.

Un exemple concret de réalisation de l'élément femelle de guidage 28 est illustré en perspective sur la figure 6. Il est conçu pour coopérer avec l'exemple concret de réalisation de l'élément mêle de guidage 26 de la figure 5.

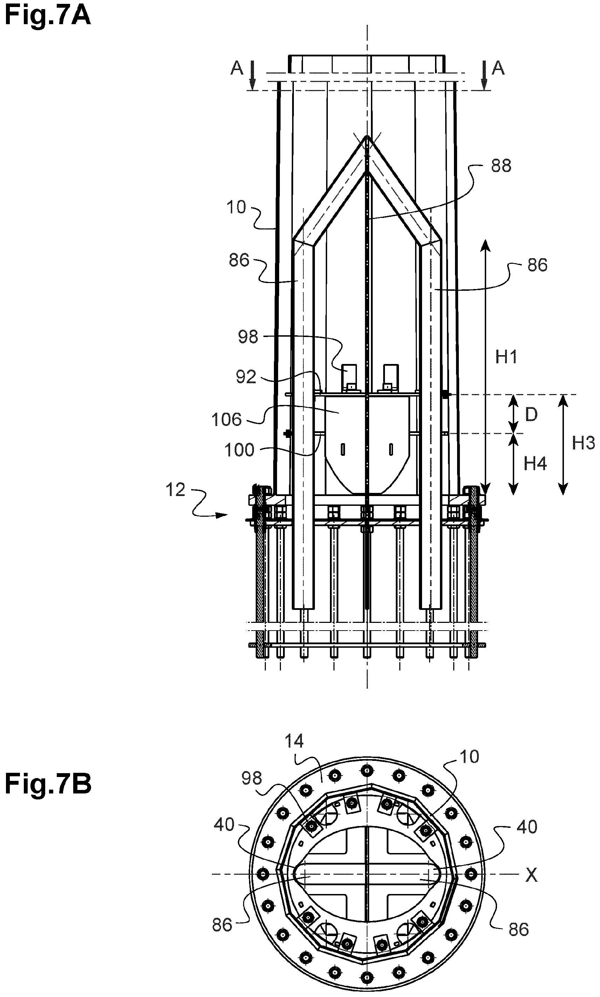

Il comporte une plaque principale réceptrice 92 de périphérie extérieure circulaire dont le diamètre correspond au diamètre intérieur que présente le fût de pylône 10 à une certaine hauteur H3 (représentée sur la figure 7A), par rapport à sa base, à laquelle doit être disposé l'élément femelle de guidage 28. Cette hauteur H3 est inférieure à H1, pour un engagement avec guidage angulaire complet de l'élément mêle de guidage 26, et même optionnellement de préférence inférieure à H2, pour un engagement précis également de la plaque de renfort 88. Cette plaque principale réceptrice 92 présente la fente profilée de centrage 38 configurée pour recevoir l'élément mâle de guidage 26 par son sommet libre 32. Dans cet exemple non limitatif comme dans celui de la figure 1, la fente 38 est oblongue avec les deux encoches 40 précitées aux extrémités de sa plus grande largeur pour recevoir les portions inférieures parallèles des deux armatures 86.

De façon optionnelle, la plaque principale réceptrice 92 présente quatre encoches supplémentaires périphériques 94. Ces dernières permettent par exemple le passage de béton coulé pour consolider la fixation du fût de pylône 10 après pose et assemblage au sol.

La plaque principale réceptrice 92 présente en outre huit trous 96, disposés par paires de part et d'autre de chaque encoche supplémentaire périphérique 94, pour sa fixation par boulonnage à huit équerres ou cornières correspondantes 98 (visibles sur les figures 7A et 7B) par ailleurs elles-mêmes fixées à la paroi interne du fût de pylône 10. Les huit trous 96, les huit équerres ou cornières 98 et les boulons correspondants forment les moyens de fixation 42 précités.

L'élément femelle de guidage 28 de la figure 6 comporte en outre de façon optionnelle une plaque secondaire 100 de consolidation, de périphérie extérieure circulaire dont le diamètre correspond au diamètre intérieur que présente le fût de pylône 10 à une certaine hauteur H4 = H3 - D, où D est la distance maintenue entre les deux plaques 92 et 100 à l'aide de pions 102 formant entretoises et donc fixés orthogonalement entre elles. La plaque secondaire 100 est elle aussi évidée par une ouverture hexagonale 104 sensiblement plus large que la fente profilée de centrage 38. Elle ne doit pas entraver l'insertion de l'élément mâle de guidage 26.

L'élément femelle de guidage 28 de la figure 6 comporte enfin deux plaques latérales 106 formant rampes de protection de la plaque principale réceptrice 92 et remplissant en outre une fonction de guidage supplémentaire du sommet libre 32 de l'élément mâle de guidage vers la fente profilée de centrage 38. Elles sont disposées en biais l'une face à l'autre dans des plans obliques parallèles à l'axe des deux encoches 40 et reposent respectivement en partie médiane sur deux côtés opposés de l'ouverture hexagonale de la plaque secondaire 100. Elles reposent en outre en partie inférieure contre la paroi interne du fût de pylône 10 dont elles épousent la forme, par exemple à son extrémité inférieure de contact avec le socle support 12. Elles s'étendent en partie supérieure sous la plaque principale réceptrice 92 au voisinage des bords longitudinaux de plus faible largeur de la fente profilée de centrage 38.

Les éléments mâle et femelle 26, 28 des figures 5 et 6 sont représentés sur la figure 7A en coupe simplifiée à l'intérieur du fût de pylône 10 après assemblage et fixation de ce dernier sur le socle support 12. On y voit que la hauteur H1 est élevée et nettement supérieure à H3, par exemple de l'ordre de 1 mètre +/- 10% pour H1 contre 50 centimètres +/- 10% pour H3, dans le cas d'un fût de pylône pour le transport et/ou la distribution de courant électrique dont les caractéristiques physiques ont été précisées précédemment, avec une hauteur totale pour l'élément mâle de guidage 26 au-dessus du sol de 1,30 mètre +/- 10%. Cela permet d'améliorer la qualité de l'assemblage du fût de pylône 10 sur le socle support 12 par un engagement vertical mieux maîtrisé de l'élément mâle de guidage 26 dans l'élément femelle 28. On y voit également que les deux armatures 86 et la plaque de renfort 88 s'étendent assez profondément sous le sol dans la cage d'ancrage du socle support 12.

La figure 7B est une vue de dessus selon la section A-A de la figure 7A. On y voit la bride à collerette 14 du fût de pylône 10 percée de vingt trous avec boulons correspondants pour sa fixation au socle support 12. On y voit également distinctement les huit équerres ou cornières 98 de fixation de l'élément femelle de guidage 28 dans le volume intérieur du fût de pylône 10, ainsi que les deux armatures 86 de l'élément mâle de guidage 26 qui s'engagent angulairement dans la direction imposée par l'axe X des deux encoches 40 de l'élément femelle de guidage 28.

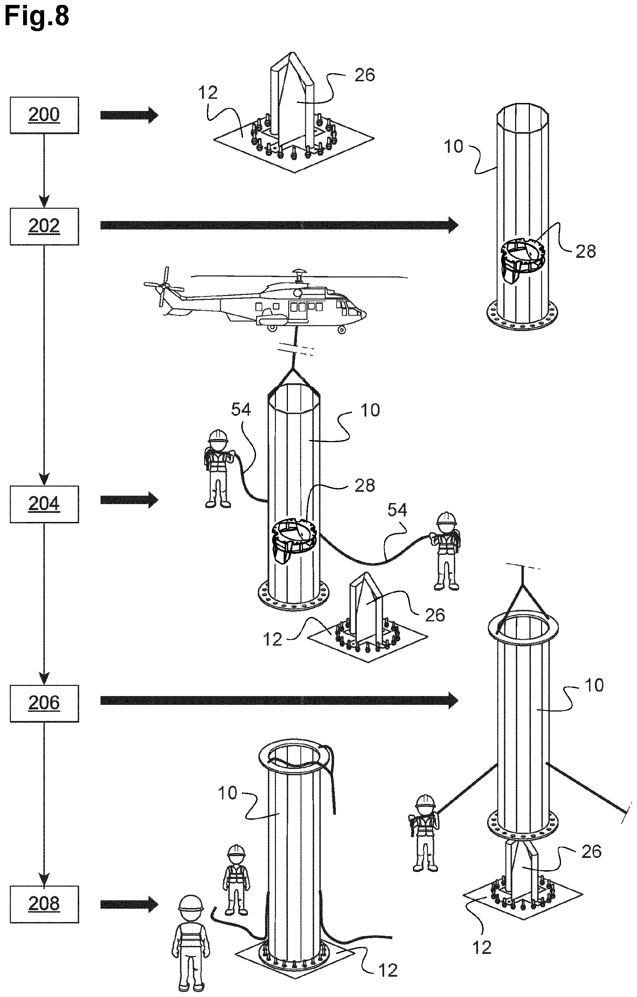

Il résulte de ce qui précède les étapes successives d'un procédé d'assemblage du fût de pylône 10 sur son socle support 12 disposé au sol telles qu'illustrées sur la figure 8.

Au cours d'une première étape 200, l'élément mâle de guidage 26 de la figure 5 est fixé sur le socle support 12 par boulonnage.

Au cours d'une étape suivante 202, l'élément femelle de guidage 28 de la figure 6 est disposé et fixé dans le fût de pylône 10 à la hauteur H2. On notera que la plaque secondaire 100 de consolidation n'y est pas représentée. Elle est en effet optionnelle.

Au cours d'une étape suivante 204, le fût de pylône 10 dans lequel est fixé l'élément femelle de guidage 28 est approché par hélicoptère du socle support 12 sur lequel est fixé l'élément mâle de guidage 26. Cette approche est guidée au sol par deux opérateurs, à l'aide des cordes 54, qui se tiennent à bonne distance du fût de pylône 10.

Au cours d'une étape suivante 206, le fût de pylône 10 est suffisamment proche du socle support 12 pour se tenir approximativement à sa verticale et commencer sa descente progressive jusqu'à s'engager autour de l'élément mâle de guidage 26. A partir de ce moment, la poursuite de la descente est essentiellement guidée verticalement et angulairement par coopération des éléments mâle et femelle de guidage 26, 28, c'est-à-dire par engagement du sommet libre 32 de l'élément mâle de guidage 26 dans la fente profilée de centrage 38 de l'élément femelle de guidage 28. La présence des opérateurs à proximité n'est pas nécessaire.

Au cours d'une dernière étape 208, la descente se poursuit jusqu'à ce que le fût de pylône 10 atteigne le socle support 12 en étant toujours guidé et centré par coopération des éléments mâle et femelle de guidage 26, 28. Après avoir ôté les capuchons 60 le cas échéant, l'ensemble peut être fixé par boulonnage.

Il apparaît clairement qu'un dispositif de guidage tel que l'un de ceux décrits précédemment permet de faciliter l'assemblage d'un fût de pylône sur son socle support en limitant les risques et dangers d'une telle opération.

On notera par ailleurs que l'invention n'est pas limitée aux modes de réalisation décrits précédemment.

Ainsi, deux modes de réalisation préférés ont été précédemment décrits dans lesquels la fente de la plaque réceptrice de l'élément femelle de guidage présente respectivement deux encoches (référence 40) diamétralement opposées et quatre encoches (références 78 et 80) diamétralement opposées deux à deux, pour la réception de respectivement deux armatures diamétralement opposées (référence 36 ou 86) et quatre armatures diamétralement opposées deux à deux (références 72 et 74) de l'élément mâle de guidage. Mais, en variante, le nombre d'encoches dans l'élément femelle et le nombre d'armatures dans l'élément mâle peuvent être différents. Tout d'abord, l'élément femelle de guidage peut ne comporter aucune encoche si aucun guidage renforcé en orientation angulaire de l'assemblage n'est souhaité. En outre, le nombre d'encoches peut être impair et lorsqu'il y a au moins deux encoches, elles ne sont pas nécessairement diamétralement opposées. Enfin, *a minima* pour un guidage renforcé en orientation angulaire, la fente de la plaque réceptrice de l'élément femelle de guidage peut ne comporter qu'une seule encoche destinée à recevoir une seule armature, configurée pour cela, de l'élément mâle de guidage, quel que soit le nombre d'armatures.

Il apparaîtra plus généralement à l'homme de l'art que diverses modifications peuvent être apportées aux modes de réalisation décrits ci-dessus, à la lumière de l'enseignement qui vient de lui être divulgué. Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

## Revendications

1. Dispositif de guidage (24 ; 62) pour l'assemblage d'un fût de pylône (10) sur un socle support (12) disposé au sol, comportant :
- un élément mâle de guidage (26 ; 64), s'étendant depuis une base (30 ; 68) où il présente une largeur maximale jusqu'à un sommet libre (32 ; 70) de largeur minimale ; et
- un élément femelle de guidage (28 ; 66), à fente profilée de centrage (38 ; 76) configurée pour recevoir l'élément mâle de guidage (26 ; 64) par son sommet libre (32 ; 70), destiné à être solidaire du fût de pylône (10) ;
**caractérisé en ce que** :
- l'élément mâle de guidage (26 ; 64) est pourvu de moyens (34) de fixation conçus pour le rendre solidaire du socle support (12) par sa base (30 ; 68) depuis laquelle il s'étend jusqu'à son sommet libre (32 ; 70) ; et
- l'élément femelle de guidage (28 ; 66) est pourvu de moyens de fixation (42 ; 96, 98) conçus pour le disposer et le fixer dans un volume intérieur du fût de pylône (10).

2. Dispositif de guidage (24 ; 62) selon la revendication 1, dans lequel l'élément mâle de guidage (26 ; 64) est de forme générale triangulaire ou pyramidale ou arrondie au moins au voisinage de son sommet libre (32 ; 70) et comporte au moins deux armatures (86 ; 72, 74) distantes à sa base (30 ; 68) se rejoignant au sommet libre (32 ; 70).

3. Dispositif de guidage (24) selon la revendication 2, dans lequel l'élément mâle de guidage (26) comporte en outre une plaque de renfort (88), de forme générale triangulaire au moins au voisinage de son sommet libre (32), s'étendant entre deux desdites au moins deux armatures (86) depuis la base (30) dans un plan orthogonal à un plan dans lequel s'étendent ces deux desdites au moins deux armatures (86).

4. Dispositif de guidage (24) selon la revendication 3, dans lequel la plaque de renfort (88) est arrondie et soudée aux deux desdites au moins deux armatures (86) au sommet libre (32) de l'élément mâle (26).

5. Dispositif de guidage (24) selon l'une quelconque des revendication 1 à 4, dans lequel l'élément femelle (28) comporte une plaque réceptrice (92) à fente oblongue (38) et des équerres ou cornières (98) de fixation de cette plaque réceptrice (92) à l'intérieur du fût de pylône (10) à distance (H3) de son extrémité inférieure de contact avec le socle support (12).

6. Dispositif de guidage (24) selon la revendication 5, dans lequel la fente oblongue (38) de la plaque réceptrice (92) de l'élément femelle (28) comporte en outre au moins une encoche (40), par exemple deux encoches (40) diamétralement opposées, d'insertion d'au moins une armature (86), par exemple deux armatures (86) diamétralement opposées, de l'élément mâle de guidage (26) pour un guidage renforcé en orientation angulaire de l'assemblage.

7. Dispositif de guidage (24) selon la revendication 5 ou 6, dans lequel l'élément femelle de guidage (28) comporte en outre au moins deux rampes de protection et de guidage (106) s'étendant entre :
- au moins deux bords longitudinaux de la fente oblongue (38) ; et
- une paroi interne du fût de pylône (10) au niveau de son extrémité inférieure de contact avec le socle support (12).

8. Dispositif de guidage (24) selon la revendication 7, dans lequel l'élément femelle de guidage (28) comporte en outre une plaque (100) de consolidation à ouverture élargie fixée à l'intérieur du fût de pylône (10) parallèlement à la plaque réceptrice (92) entre cette dernière et l'extrémité inférieure de contact du fût de pylône (10) avec le socle support (12), cette plaque de consolidation (100) formant support médian des rampes de protection et de guidage (106).

9. Dispositif de guidage (24 ; 62) selon l'une quelconque des revendication 1 à 8, dans lequel sont prévus des capuchons (60) de protection de tiges filetées (20) de fixation du fût de pylône (10) au socle support (12).

10. Procédé d'assemblage d'un fût de pylône (10) sur un socle support (12) disposé au sol, comportant les étapes suivantes :
- fixation (200) d'un élément mâle de guidage (26), s'étendant depuis une base (30) où il présente une largeur maximale jusqu'à un sommet libre (32) de largeur minimale, au socle support (12) par sa base (30) depuis laquelle il s'étend jusqu'à son sommet libre (32) ;
- fixation (202) d'un élément femelle de guidage (28), à fente profilée de centrage (38) configurée pour recevoir l'élément mâle de guidage (26) par son sommet libre (32), au fût de pylône (10) dans un volume intérieur duquel il est disposé ;
- approche progressive (204, 206) du fût de pylône (10) au-dessus du socle support (12) jusqu'à engager le sommet libre (32) de l'élément mâle de guidage (26) dans la fente profilée de centrage (38) de l'élément femelle de guidage (28) ; puis
- descente progressive (208) du fût de pylône (10) jusqu'à atteindre le socle support (12) en étant guidé et centré par coopération des éléments mâle (26) et femelle (28) de guidage.

## Patentansprüche

1. Führungsvorrichtung (24; 62) zur Montage eines Mastschafts (10) auf einem an dem Boden angeordneten Trägersockel (12), die Folgendes aufweist:
- ein Stecker-Führungselement (26; 64), das sich von einer Basis (30; 68) erstreckt, wo es eine maximale Breite bis zu einem freien Scheitelpunkt (32; 70) mit minimaler Breite aufweist; und
- ein Buchsen-Führungselement (28; 66) mit einem profilierten Zentrierschlitz (38; 76), der so eingerichtet ist, dass er das Stecker-Führungselement (26; 64) mit seinem freien Scheitelpunkt (32; 70) aufnimmt, das fest mit dem Mastschaft (10) verbunden sein soll;
**dadurch gekennzeichnet, dass**:
- das Stecker-Führungselement (26; 64) mit Befestigungsmitteln (34) versehen ist, die so ausgelegt sind, dass sie durch ihre Basis (30; 68), von der sie sich bis zu ihrem freien Scheitelpunkt (32; 70) erstreckt, fest mit dem Trägersockel (12) verbunden sind; und
- das Buchsen-Führungselement (28; 66) mit Befestigungsmitteln (42; 96, 98) versehen ist, die so ausgelegt sind, dass sie in einem Innenvolumen des Mastschafts (10) angeordnet sind und letzteren befestigen.

2. Führungsvorrichtung (24; 62) nach Anspruch 1, wobei das Stecker-Führungselement (26; 64) im Allgemeinen dreieckig oder pyramidenförmig oder abgerundet ist, mindestens in der Nähe seines freien Scheitelpunkts (32; 70), und mindestens zwei Rahmen (86; 72, 74) aufweist, die an seiner Basis (30; 68) entfernt sind und sich an dem freien Scheitelpunkt (32; 70) zusammenfügen.

3. Führungsvorrichtung (24) nach Anspruch 2, wobei das Stecker-Führungselement (26) ferner eine Verstärkungsplatte (88) aufweist, die im Allgemeinen dreieckig geformt ist, mindestens in der Nähe seines freien Scheitelpunkts (32), und sich zwischen zwei der mindestens zwei Rahmen (86) von der Basis (30) in einer Ebene orthogonal zu einer Ebene erstreckt, in der sich diese beiden der mindestens zwei Rahmen (86) erstrecken.

4. Führungsvorrichtung (24) nach Anspruch 3, wobei die Verstärkungsplatte (88) abgerundet und mit den beiden mindestens zwei Rahmen (86) an dem freien Scheitelpunkt (32) des Stecker-Elements (26) verschweißt ist.

5. Führungsvorrichtung (24) nach einem der Ansprüche 1 bis 4, wobei das Buchsen-Element (28) eine Aufnahmeplatte (92) mit länglichem Schlitz (38) und Halterungen oder Winkel (98) zur Befestigung dieser Aufnahmeplatte (92) in dem Inneren des Mastschafts (10) in einem Abstand (H3) von dessen unterem Kontaktende mit dem Trägersockel (12) aufweist.

6. Führungsvorrichtung (24) nach Anspruch 5, wobei der längliche Schlitz (38) der Aufnahmeplatte (92) des Buchsen-Elements (28) ferner mindestens eine Kerbe (40), beispielsweise zwei diametral gegenüberliegende Kerben (40), zum Einsetzen mindestens eines Rahmens (86), beispielsweise zwei diametral gegenüberliegende Rahmen (86), des Stecker-Führungselements (26) zur verstärkten Führung bei der Winkelausrichtung der Baugruppe aufweist.

7. Führungsvorrichtung (24) nach Anspruch 5 oder 6, wobei das Buchsen-Führungselement (28) ferner mindestens zwei Schutz- und Führungsrampen (106) aufweist, die sich zwischen Folgendem erstrecken:
- mindestens zwei Längskanten des länglichen Schlitzes (38); und
- einer Innenwand des Mastschafts (10) in dem Bereich seines unteren Kontaktendes mit dem Trägersockel (12).

8. Führungsvorrichtung (24) nach Anspruch 7, wobei das Buchsen-Führungselement (28) ferner eine Verstärkungsplatte (100) mit verbreiterter Öffnung aufweist, die innerhalb des Mastschafts (10) parallel zur Aufnahmeplatte (92) zwischen dieser und dem unteren Kontaktende des Mastschafts (10) mit dem Trägersockel (12) befestigt ist, wobei diese Verstärkungsplatte (100) einen mittleren Träger der Schutz- und Führungsrampen (106) bildet.

9. Führungsvorrichtung (24; 62) nach einem der Ansprüche 1 bis 8, wobei Schutzkappen (60) für Gewindestangen (20) zur Befestigung des Mastschafts (10) an dem Trägersockel (12) vorgesehen sind.

10. Verfahren zur Montage eines Mastschafts (10) auf einem an dem Boden angeordneten Trägersockel (12), das die folgenden Schritte aufweist:
- Befestigung (200) eines Stecker-Führungselements (26), das sich von einer Basis (30) erstreckt, wo es eine maximale Breite bis zu einem freien Scheitelpunkt (32) mit minimaler Breite aufweist, an dem Trägersockel (12) durch seine Basis (30), von der aus es sich bis zu seinem freien Scheitelpunkt (32) erstreckt;
- Befestigung (202) eines Buchsen-Führungselements (28) mit einem profilierten Zentrierschlitz (38), der so eingerichtet ist, dass er das Stecker-Führungselement (26) mit seinem freien Scheitelpunkt (32) aufnimmt, an dem Mastschaft (10), in dessen Innenvolumen es angeordnet ist;
- schrittweises Vorrücken (204, 206) des Mastschafts (10) über den Trägersockel (12) hinaus, bis der freie Scheitelpunkt (32) des Stecker-Führungselements (26) in den profilierten Zentrierschlitz (38) des Buchsen-Führungselements (28) eingreift; dann
- schrittweises Absenken (208) des Mastschafts (10) bis zum Erreichen des Trägersockels (12), wobei er durch das Zusammenwirken des Stecker- (26) und des Buchsen- (28) Führungselements geführt und zentriert wird.

## Claims

1. A guiding device (24; 62) for assembling a pylon shaft (10) on a support base (12) arranged on the ground, comprising:
- a male guiding element (26; 64), extending from a base (30; 68) where it has a maximum width to a free top (32; 70) of minimum width; and
- a female guiding element (28; 66) with a profiled centering slot (38; 76) configured to receive the male guiding element (26; 64) by its free top (32; 70), intended to be integral with the pylon shaft (10);
**characterized in that**:
- the male guiding element (26; 64) is provided with fastening means (34) designed to secure it to the support base (12) by its base (30; 68) from which it extends until its free top (32; 70); and
- the female guiding element (28; 66) is provided with fastening means (42; 96, 98) designed to position and secure it in an internal volume of the pylon shaft (10).

2. The guiding device (24; 62) according to claim 1, wherein the male guiding element (26; 64) has a triangular or pyramidal or rounded general shape at least in the vicinity of its free top (32; 70) and comprises at least two reinforcements (86; 72, 74) spaced apart at its base (30; 68) and meeting at the free top (32; 70).

3. The guiding device (24) according to claim 2, wherein the male guiding element (26) further comprises a reinforcement plate (88), generally triangular in shape at least in the vicinity of its free top (32), extending between two of said at least two reinforcements (86) from the base (30) in a plane orthogonal to a plane in which these two of said at least two reinforcements (86) extend.

4. The guiding device (24) according to claim 3, wherein the reinforcement plate (88) is rounded and welded to both of said at least two reinforcements (86) at the free top (32) of the male element (26).

5. The guiding device (24) according to any of claims 1 to 4, wherein the female element (28) comprises a receiving plate (92) with an oblong slot (38) and brackets or angle irons (98) for fixing this receiving plate (92) inside the pylon shaft (10) at a distance (H3) from its lower end in contact with the support base (12).

6. The guiding device (24) according to claim 5, wherein the oblong slot (38) in the receiving plate (92) of the female element (28) further comprises at least one notch (40), for example two diametrically opposed notches (40), for inserting at least one reinforcement (86), for example two diametrically opposed reinforcements (86), of the male guiding element (26) for reinforced angular guidance of the assembly.

7. The guiding device (24) according to claim 5 or 6, wherein the female guiding element (28) further comprises at least two protective and guiding ramps (106) extending between:
- at least two longitudinal edges of the oblong slot (38); and
- an inner wall of the pylon shaft (10) at its lower end in contact with the support base (12).

8. The guiding device (24) according to claim 7, wherein the female guiding element (28) further comprises a reinforcement plate (100) with an enlarged opening fixed inside the pylon shaft (10) parallel to the receiving plate (92) between the latter and the lower end of the pylon shaft (10) in contact with the support base (12), this reinforcement plate (100) forming a median support for the protection and guiding ramps (106).

9. The guiding device (24; 62) according to any of claims 1 to 8, wherein caps (60) are provided to protect threaded rods (20) for fastening the pylon shaft (10) to the support base (12).

10. A method for assembling a pylon shaft (10) on a support base (12) arranged on the ground, comprising the following steps:
- fastening (200) of a male guiding element (26), extending from a base (30) where it has a maximum width to a free top (32) with a minimum width, to the support base (12) by its base (30) from which it extends to its free top (32);
- fastening (202) of a female guiding element (28), with a profiled centering slot (38) configured to receive the male guiding element (26) by its free top (32), to the pylon shaft (10) in an internal volume of which it is arranged;
- gradually approaching (204, 206) the pylon shaft (10) above the support base (12) until the free top (32) of the male guiding element (26) engages in the profiled centering slot (38) of the female guiding element (28); then
- gradual bringing (208) the pylon shaft (10) down until it reaches the support base (12), guided and centered by the cooperation of the male (26) and female (28) guiding elements.
